(19) Europäisches Patentamt
European Patent Office
Office européen des brevets

(11) **EP 4 202 501 B1**

(12) **FASCICULE DE BREVET EUROPEEN**

(45) Date de publication et mention
de la délivrance du brevet:
**04.03.2026 Bulletin 2026/10**

(21) Numéro de dépôt: **22216611.8**

(22) Date de dépôt: **23.12.2022**

(51) Classification Internationale des Brevets (IPC):
***G01T 1/20*** *(2006.01)*     ***G01T 1/36*** *(2006.01)*
***G01V 5/00*** *(2024.01)*

(52) Classification Coopérative des Brevets (CPC):
**G01V 5/26; G01T 1/2008; G01T 1/362**

(54) **BALISE DE DÉTECTION D'UNE SOURCE D'IRRADIATION COMPORTANT PLUSIEURS DÉTECTEURS SCINTILLATEURS**

BAKE ZUR DETEKTION EINER STRAHLUNGSQUELLE MIT MEHREREN SZINTILLATORDETEKTOREN

BEACON FOR DETECTING AN IRRADIATION SOURCE COMPRISING A PLURALITY OF SCINTILLATOR DETECTORS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **26.12.2021 FR 2114528**

(43) Date de publication de la demande:
**28.06.2023 Bulletin 2023/26**

(73) Titulaire: **Commissariat à l'Energie Atomique et aux Energies Alternatives**
**75015 Paris (FR)**

(72) Inventeurs:
- **AMOYAL, Guillaume**
  **91191 Gif-sur-Yvette Cedex (FR)**
- **DE STEFANO, Roberto**
  **91191 Gif-sur-Yvette Cedex (FR)**
- **CARREL, Frederick**
  **91191 Gif-sur-Yvette Cedex (FR)**
- **LYNDE, Clement**
  **91191 Gif-sur-Yvette Cedex (FR)**

(74) Mandataire: **INNOV-GROUP**
**209 Avenue Berthelot**
**69007 Lyon (FR)**

(56) Documents cités:
EP-A1- 3 401 706    US-A1- 2018 329 089
US-B2- 9 477 005

**Description**

## DOMAINE TECHNIQUE

Le domaine technique de l'invention est la détection de sources irradiantes à l'aide d'une balise de surveillance.

## ART ANTERIEUR

Les accès à des installations nucléaires, ainsi qu'à certaines installations pouvant comporter des sources radioactives, sont généralement équipés de balises de détection. L'objectif est de détecter une présence d'une source irradiante portée par un individu ou disposée dans un véhicule. De telles balises peuvent également être placées à des postes frontières. Ce type de balise est en général formé d'un ou de plusieurs scintillateurs plastiques, de grand volume. Le principe de fonctionnement est fondé sur une mesure en continu d'un taux de comptage, représentant un nombre d'impulsions détectées par seconde. Lorsque le taux de comptage mesuré s'écarte significativement d'une valeur de bruit de fond, une alarme de détection est produite.

L'information délivrée par ce type de balise se résume à une détection ou une non détection d'un taux de comptage excédant un certain seuil. Elle ne comporte pas d'information permettant une pré-caractérisation d'une source détectée.

Le document US2018/329089 décrit un dispositif destiné à former une image montrant la position d'une source de neutrons ou de photons gamma. Le dispositif comporte deux détecteurs espacés l'un de l'autre, et configurés pour détecter des neutrons d'énergie supérieure à 1 MeV, ou des photons d'énergie supérieure à 300 keV.

Le document EP3401706 décrit un dispositif de mesure portable permettant une détection simultanée de neutrons et de photons gamma. Le dispositif peut comporter un matériau scintillateur de type NaIL (iodure de sodium dopé au Lithium).

Le document US9477005 décrit un dispositif de détection de matière nucléaire, se désintégrant par fission spontanée. La détection d'une fission spontanée est basée sur une différence de vitesse de propagation des neutrons rapides et des photons.

L'invention décrite ci-après vise à compléter l'information résultant d'une balise de surveillance. L'objectif est d'obtenir davantage d'information quant au type de source irradiante détectée.

## EXPOSE DE L'INVENTION

Un premier objet de l'invention est une balise de détection, selon la revendication 1, destinée à détecter une présence d'une source irradiante dans un environnement s'étendant autour de ladite balise, la source irradiante étant susceptible d'émettre des photons ionisants, de type X ou gamma, et/ou des neutrons, la balise comportant :

- au moins un premier détecteur, comportant un matériau scintillateur organique, tridimensionnel, le premier détecteur étant configuré pour former une impulsion suite à une interaction d'un neutron ou d'un photon dans le matériau scintillateur organique et pour générer un premier signal de détection à partir de chaque impulsion ainsi formée ;

la balise de détection étant caractérisée en ce qu'elle comporte :

- au moins un deuxième détecteur, comportant un matériau scintillateur inorganique, tridimensionnel, ayant fait l'objet d'une adjonction d'un isotope de capture, propice à une capture de neutrons thermiques, le deuxième détecteur étant configuré pour former une impulsion suite à une interaction d'un neutron ou d'un photon dans le matériau scintillateur inorganique, et générer un deuxième signal de détection à partir de chaque impulsion ainsi formée, la plus petite dimension du deuxième détecteur étant supérieure à 1 cm ;
- une unité de traitement, reliée à chaque premier et à chaque deuxième détecteur, l'unité de traitement étant configurée pour effectuer une caractérisation de la source irradiante détectée par la balise à partir du premier signal de détection et du deuxième signal de détection.

Plusieurs modes de réalisation sont définis par les revendications dépendantes.

Un deuxième objet de l'invention, selon la revendication 10, est un procédé de détection d'une source irradiante présente dans un environnement s'étendant autour d'une balise selon le premier objet de l'invention, comportant les étapes de :

a) analyse d'au moins un premier signal de détection et d'au moins un deuxième signal de détection, de telle sorte que lorsque le premier signal de détection franchit un premier seuil ou lorsque le deuxième signal de détection franchit un deuxième seuil, un signal d'alerte est donné ;

b) suite à l'émission d'un signal d'alerte, caractérisation du rayonnement émis par la source à l'aide du premier signal de détection et/ou du deuxième signal de détection.

L'invention sera mieux comprise à la lecture de l'exposé des exemples de réalisation présentés, dans la suite de la description, en lien avec les figures listées ci-dessous.

## FIGURES

La figure 1A schématise un premier exemple de balise selon l'invention.

La figure 1B schématise un deuxième exemple de balise selon l'invention.

La figure 2 montre des composants pouvant être inclus dans une unité de traitement de la balise, de façon à effectuer un traitement de signaux résultant des détecteurs de la balise.

Les figures 3A, 3B et 3C schématisent respectivement une première configuration, une deuxième configuration et une troisième configuration d'essais.

La figure 4 montre des spectres d'énergie résultant du deuxième détecteur, obtenus en mettant en œuvre chaque configuration d'essai, en utilisant différentes sources.

La figure 5 schématise une forme d'une impulsion résultant d'une interaction d'un neutron ou d'un photon dans un détecteur scintillateur dopé avec un isotope de capture.

Les figures 6A, 6B et 6C sont des diagrammes montrant le paramètre de forme en fonction de l'énergie d'impulsions détectées, par le deuxième détecteur, en mettant en œuvre la première configuration, respectivement avec des sources de $^{137}Cs$, $^{60}Co$ et $^{252}Cf$.

Les figure 6D et 6E sont des diagrammes montrant le paramètre de forme en fonction de l'énergie d'impulsions détectées, par le deuxième détecteur, en mettant en œuvre la deuxième configuration et la troisième configuration en utilisant une source de $^{252}Cf$.

La figure 7A est un diagramme paramètre de forme/énergie d'impulsions détectées par le deuxième détecteur, obtenu selon la première configuration, sans source irradiante.

La figure 7B est un spectre d'énergie résultant du deuxième détecteur, obtenu dans la première configuration, sans source irradiante.

La figure 8A et la figure 8B sont des spectres d'énergie formés à partir de signaux de détection issus de deux détecteurs scintillateurs organiques différents, les scintillateurs étant exposés à une source de $^{137}Cs$, ou de $^{60}Co$ ou de $^{252}Cf$.

La figure 9 est un histogramme de Rossi-alpha, correspondant à un histogramme de décalages temporels d'impulsions résultant de rayons émis en coïncidence temporelle.

La figure 10A schématise un déplacement d'une source le long de différents détecteurs formant une balise.

La figure 10B montre une évolution du taux de comptage de détecteurs constituant la balise en fonction de la position de la source.

La figure 11 schématise des étapes de traitement pouvant être effectués par la balise.

## EXPOSE DE MODES DE REALISATION PARTICULIERS

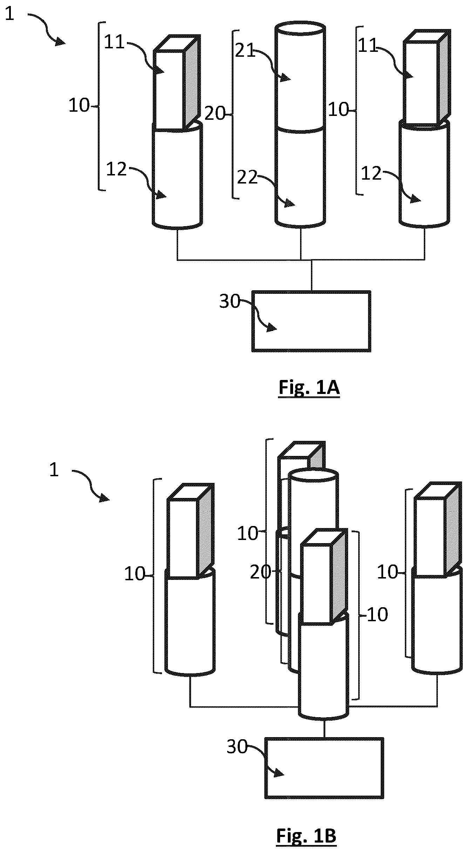

La figure 1A représente un exemple de balise 1 conçue pour détecter une présence d'une source irradiante au voisinage de ladite balise. Par source irradiante, on entend une source émettrice d'un rayonnement ionisant. Le rayonnement ionisant peut comporter des photons ionisants, généralement des photons gamma ou X, et/ou des neutrons. Par voisinage, on entend dans un rayon de quelques mètres, autour de la balise.

La balise comporte 1 un premier détecteur 10 ou plusieurs premiers détecteurs 10. Chaque premier détecteur comporte un premier matériau de détection 11, de type scintillateur organique, et un premier circuit de détection 12. Le matériau de détection est destiné à interagir avec le rayonnement ionisant émis par la source. De façon connue dans le domaine des scintillateurs, chaque interaction génère une impulsion lumineuse, cette dernière étant convertie en impulsion électrique par un circuit de détection. Le circuit de détection 12 comporte un photodétecteur, relié au matériau de détection, et configuré pour émettre des impulsions électriques dont l'amplitude est corrélée avec la quantité d'énergie déposée par le rayonnement ionisant lors de l'interaction dans le matériau de détection. Ainsi, sous l'effet d'une interaction avec un rayonnement ionisant, en l'occurrence un neutron ou un photon gamma ou X, le premier matériau scintillateur 11 émet une impulsion lumineuse, dont l'intensité dépend d'une énergie déposée par le neutron ou le photon X ou gamma lors de l'interaction. Le premier circuit de détection 12 détecte l'impulsion lumineuse et génère une impulsion électrique dont l'amplitude dépend de l'intensité de l'impulsion lumineuse, cette dernière dépendant de l'énergie déposée par le neutron ou le photon X ou gamma lors de l'interaction.

Le premier détecteur 10 est destiné à la détection de photons X ou gamma et/ou à la détection de neutrons. Le volume du premier matériau de détection 11 doit être suffisant pour que la sensibilité de détection soit acceptable. Ainsi, l'épaisseur, ou, le diamètre, et de façon plus générale, la plus petite dimension du volume, est supérieure à 1 cm, et de préférence supérieure à 2 cm ou 5 cm. Un avantage des scintillateurs organiques est qu'il est possible d'obtenir des volumes de détection élevés, typiquement supérieurs à 1 $dm^3$ voire à 10 $dm^3$ ou plusieurs dizaines de $dm^3$.

La balise comporte un deuxième détecteur 20, ou plusieurs deuxièmes détecteurs 20. Le ou chaque deuxième détecteur 20 comporte un deuxième matériau de détection 21, de type scintillateur inorganique, et un deuxième circuit de détection 22. Le deuxième circuit de détection 22 comporte un photodétecteur, comme décrit en lien avec le premier circuit de détection. Le matériau de détection 21 du ou de chaque deuxième détecteur 20 est constitué d'un matériau de type scintillateur inorganique, ayant préalablement subi une adjonction d'un isotope de capture, propice à une capture neutronique, entraînant une émission d'une particule chargée. La capture neutronique peut notamment être une capture de type $(n,\alpha)$. L'isotope de capture peut par exemple être $^6Li$. De façon plus générale, l'isotope de capture ajouté permet une émission d'une particule chargée, dans le scintillateur inorganique, sous l'effet d'une capture d'un neutron. La fraction massique de l'isotope de capture est de préférence comprise entre 1 % et 20 %. Plus la fraction massique est élevée, plus le détecteur est sensible aux neutrons.

Le deuxième détecteur 20 est destiné à la détection de photons X ou gamma et/ou à la détection de neutrons. Le volume du deuxième matériau de détection 21 doit être suffisant pour que la sensibilité de détection soit acceptable. Ainsi, l'épaisseur, ou, le diamètre, et de façon plus générale, la plus petite dimension du volume du deuxième détecteur, est supérieure à 1 cm, et de préférence supérieure à 2 cm ou 5 cm. Par plus petite dimension, on entend la plus petite dimension parmi les trois dimensions du volume du deuxième matériau de détection 21.

Dans l'exemple décrit, le deuxième matériau de détection 21 est de l'iodure de sodium dopé au $^6Li$, désigné par la suite NaIL. Le deuxième matériau de détection peut comporter un autre type de scintillateur, par exemple CLYC ($Cs_2LiYCl_6$ :Ce) ou CLLB ($Cs_2LiLaBr_6$).

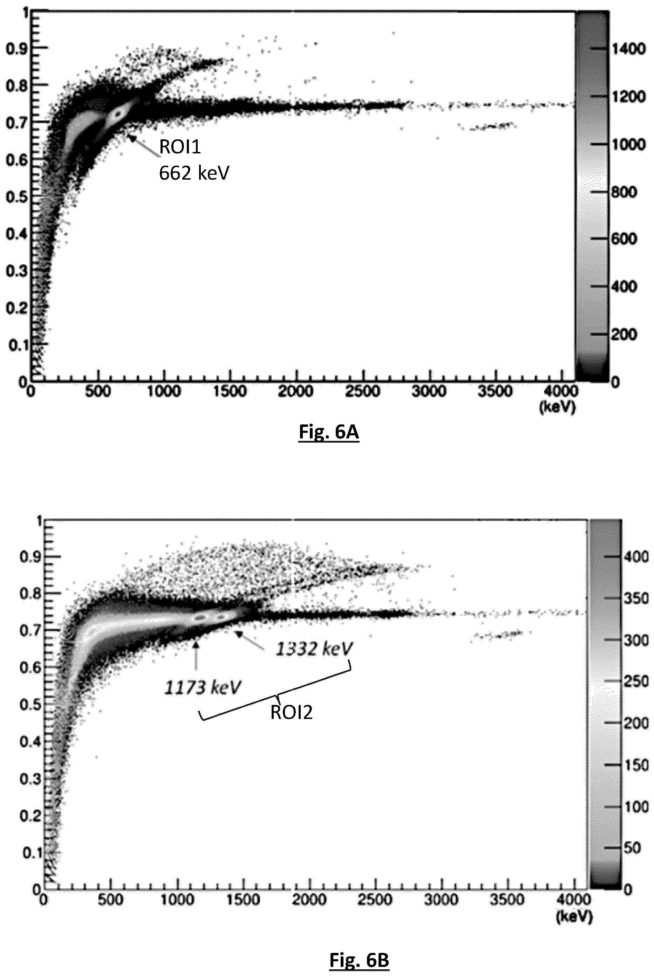

L'adjonction de l'isotope de capture permet une détection des neutrons thermiques (énergie inférieure à 0,025 eV), épithermiques (énergie entre 0,5 et 50 keV) ainsi que des neutrons intermédiaires dont l'énergie est comprise entre 50 keV et quelques centaines de keV, jusqu'à environ 1 MeV. Les propriétés de détection des neutrons thermiques ou intermédiaires par le scintillateur inorganique sont décrites par la suite, en lien avec les figures 6A à 6E.

Un des intérêts de la balise est une proximité entre les matériaux de détection organiques et inorganiques. Ainsi, la distance entre un deuxième détecteur 20 et au moins un premier détecteur 10 est de préférence inférieure à 30 cm, et de préférence inférieure à 20 ou 15 cm. Comme décrit par la suite, la disposition d'un premier matériau de détection 11, organique, à proximité d'un deuxième matériau de détection 21, inorganique dopé au $^6Li$ ou $^{10}B$, permet d'augmenter la sensibilité du deuxième détecteur 20 à l'égard de neutrons émis par une source présente dans le voisinage de la balise.

La figure 1B représente une autre configuration, selon laquelle le deuxième détecteur 20 est entouré de quatre premiers détecteurs 10, chaque premier détecteur 10 étant situé à moins de 30 cm, ou moins de 20 cm ou 15 cm du deuxième détecteur 20.

Selon d'autres configurations, le recours à plusieurs deuxièmes détecteurs est possible.

Chaque circuit de détection 12, 22 est configuré pour former une impulsion électrique exploitable à partir d'impulsions lumineuses générées dans le matériau scintillateur auquel il est relié. Chaque circuit de détection peut comporter un préamplificateur, et éventuellement un amplificateur et un circuit de mise en forme d'impulsions.

La balise comporte une unité de traitement 30, destinée à traiter les signaux électriques résultant des différents circuits de détection. L'unité de traitement 30 peut comprendre des circuits électroniques analogiques ou des circuits électroniques numériques. Elle peut également comporter un microprocesseur ou un autre type de circuit, par exemple FPGA (Field Progammated Gate Array - Circuit intégré programmable) mettant en œuvre un programme permettant le traitement et/ou l'interprétation des mesures résultant de chaque détecteur.

Un avantage connu des scintillateurs inorganiques est la comptabilité avec des mesures spectrométriques, dans lesquelles le scintillateur inorganique est couplé à un circuit de mesure spectrométrique. Ainsi, de préférence, l'unité de traitement 30 comporte un analyseur multicanal 32, usuellement désigné par l'acronyme MCA (Multi-Channel Analyser) de façon à traiter les impulsions résultant d'un détecteur, en particulier d'un deuxième détecteur. De façon connue, le MCA permet d'établir un spectre d'amplitude des impulsions détectées au cours d'une période de mesure. Au cours de la période de mesure, le deuxième détecteur est exposé à des photons et/ou des neutrons. L'analyseur multicanal 32 forme le spectre d'amplitude des impulsions détectées par le détecteur. Le spectre d'amplitude est usuellement désigné spectre d'énergie Sp, l'amplitude de chaque impulsion étant corrélée avec l'énergie déposée, dans le matériau détecteur, par une interaction ayant générée ladite impulsion. Le spectre d'énergie Sp est usuellement représenté sous la forme d'un histogramme, représentant une quantité d'impulsions détectées pour chaque canal d'amplitude, chaque canal d'amplitude correspondant à une bande d'énergie.

Le MCA 32 peut être précédé d'un circuit 31 d'amplification et de mise en forme des impulsions. L'unité de traitement 30 peut comporter différents MCA, chaque MCA étant connecté au circuit de détection 12, 22 d'un détecteur.

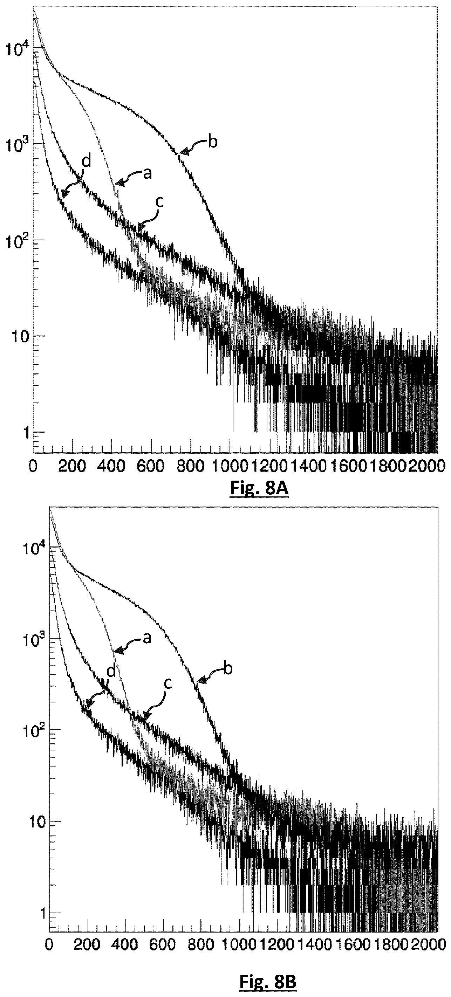

Les scintillateurs organiques sont connus pour être moins adaptés aux applications spectrométriques que les scintillateurs inorganiques. Cela est dû au fait qu'ils sont constitués d'éléments chimiques de faible numéro atomique, ce qui les rend peu propices à la formation d'une interaction photoélectrique. Dans ce type de matériau, l'interaction prédominante, lors de la détection de photons X ou gamma, est la diffusion Compton. Cependant, selon une possibilité, au moins un premier circuit de détection est connecté à un MCA, permettant d'effectuer un spectre d'amplitude des impulsions détectées. Une telle possibilité est plus largement évoquée en lien avec les figures 8A et 8B.

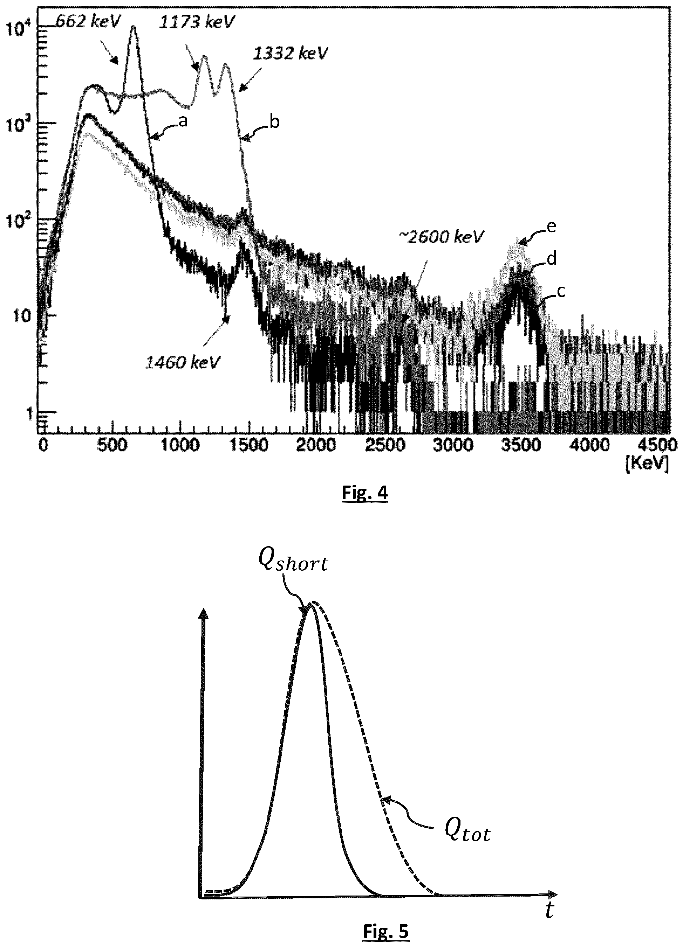

L'unité de traitement 30 peut également comporter un analyseur de la forme d'impulsions 33, couplé à un discriminateur 34, le discriminateur effectuant une classification des impulsions en fonction de leur forme. L'analyseur de forme des impulsions et le discriminateur sont décrits en lien avec les figures 5 ainsi que 6A à 6E. L'analyseur de la forme des impulsions et le discriminateur sont adaptés pour traiter des signaux de détection résultant du ou de chaque deuxième détecteur, de type scintillateur inorganique dopé.

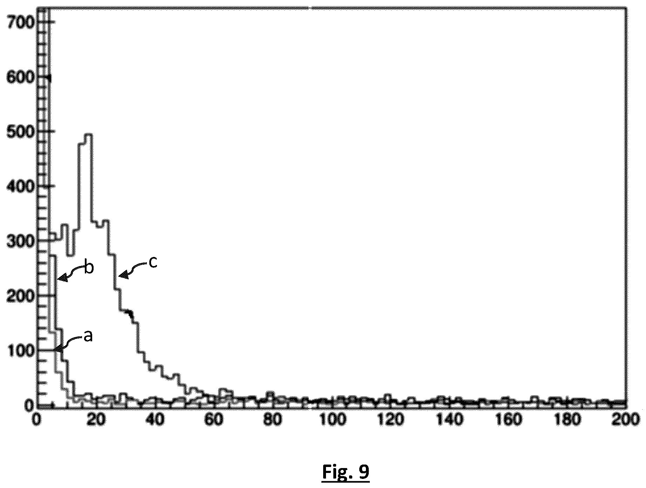

L'unité de traitement 30 peut également comporter un circuit d'analyse de coïncidence 35, configuré pour déterminer une survenue d'interactions détectées dans un même intervalle temporel et pour établir un décalage temporel entre lesdites interactions. Un exemple de circuit d'analyse de coïncidences temporelles est décrit en lien avec la figure 9.

L'unité de traitement comporte un module d'interprétation 36, programmé pour caractériser une source détectée. La caractérisation permet d'obtenir une information quant à la source détectée, s'ajoutant à la simple détection de la source. La caractérisation peut comporter :

- un type d'irradiation produit par la source : rayonnement ou neutronique ;
- une identification d'un isotope lorsque la source émet un rayonnement y ou X;
- une identification d'un type de source lorsque la source émet des neutrons, en particulier une présence d'un isotope subissant une désintégration par fission spontanée ;
- un mouvement de la source.

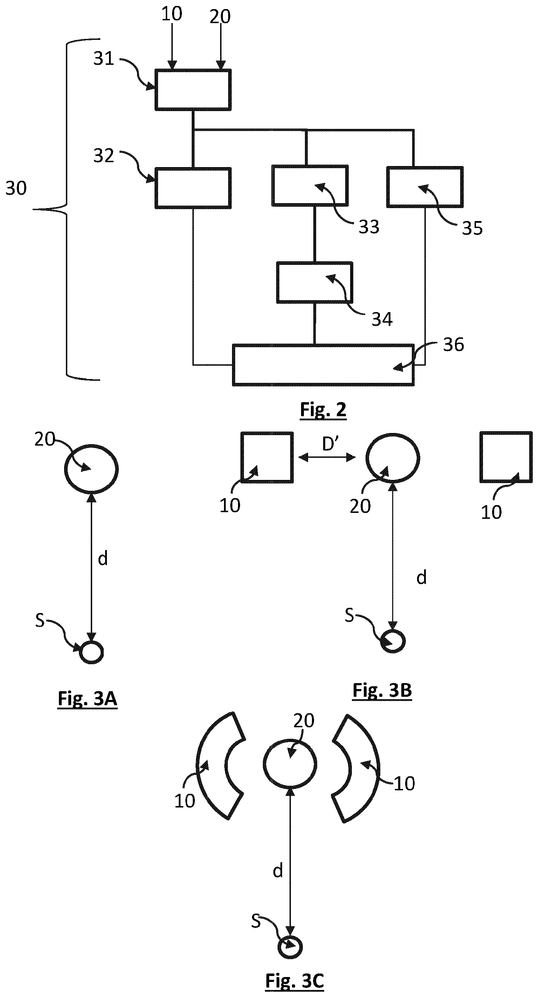

Les figures 3A, 3B et 3C montrent trois configurations ayant été testées par les inventeurs, de façon à mettre en évidence l'effet de la proximité entre un, ou plusieurs scintillateurs organiques et un scintillateur inorganique dopé au $^6$Li :

- Sur la configuration de la figure 3A (première configuration), on a placé un scintillateur inorganique 20 formé de NaIL, de forme cylindrique et de volume 3 pouces (diamètre) par 3 pouces (hauteur), à une distance d = 30 cm d'une source S. La source S peut être du $^{137}$Cs (activité 460 kBq), du $^{60}$Co (activité 314 kBq) ou du $^{252}$Cf (taux d'émission neutronique de 2.7 $10^4$ n.s$^{-1}$).
- Sur la configuration de la figure 3B (deuxième configuration), on a placé le scintillateur inorganique 20 de la figure 3A entre deux scintillateurs organiques 10, de forme parallélépipédique, constitués de Polyvinyle toluène (PVT) de volume 10 cm x10 cm x10 cm. Il s'agissait de scintillateurs de type EJ-200 - fabriquant Eljen Technology. On a disposé une source S de $^{252}$Cf à 30 cm du scintillateur inorganique NaIL. Chaque scintillateur organique 10 était disposé à une distance D' égale à 10 cm du scintillateur inorganique 20.
- Sur la configuration de la figure 3C (troisième configuration), on a disposé un scintillateur organique 10, en forme de tiers de couronne évidée et tronquée, de chaque côté du scintillateur inorganique 20. Chaque scintillateur décrivait un tronçon de couronne d'angle 120°, de hauteur 13 cm, l'épaisseur de 10 cm, et le rayon interne de 4 cm. La distance d entre la source de $^{252}$Cf et le scintillateur NaIL était de 30 cm.

Dans chacune des configurations décrites ci-dessus, le scintillateur inorganique 20 était relié à une unité de traitement 30 permettant d'établir un spectre en énergie. La figure 4 représente des spectres en énergie établis respectivement :

- en utilisant la première configuration, la source étant $^{137}$Cs (courbe a), $^{60}$Co (courbe b) et $^{252}$Cf (courbe c) ;
- en utilisant la deuxième configuration, la source étant $^{252}$Cf : courbe d ;
- en utilisant la troisième configuration, la source étant $^{252}$Cf : courbe e.

Les courbes a) et b) montrent que le scintillateur inorganique permet l'obtention de spectres d'énergie, sur lesquels les pics correspondent aux énergies d'émission de $^{137}$Cs (662 keV), $^{60}$Co (1173 keV et 1332 keV). Le pic observé à l'énergie 1460 keV correspond à $^{40}$K , naturellement présent dans certains matériaux, par exemple dans la terre ou le béton. On observe également un pic à l'énergie 2614 keV, qui correspond au radioélément $^{208}$Tl, ce dernier étant un descendant de l'isotope radioactif naturel $^{232}$Th.

Sur la courbe c), on observe un pic centré sur 3500 keV, qui correspond à des neutrons thermiques ou intermédiaires émis par la source, ou thermalisés dans l'environnement. L'énergie de 3500 keV correspond à l'énergie de la particule α émise suite à la capture neutronique. Le reste du signal de cette courbe correspond essentiellement à des photons gamma prompts ou retardés émis par la fission spontanée du $^{252}$Cf.

Sur les courbes d) et e), on observe que le pic centré sur 3500 keV présente une amplitude plus élevée que sur la courbe c), cet effet étant plus marqué sur la courbe e) que sur la courbe d). L'augmentation de l'amplitude du pic à 3500 keV est due à un effet de diffusion, par le ou chaque détecteur organique 10, des neutrons émis par la source S. Chaque premier détecteur 10 comporte un matériau de détection organique, propice à la thermalisation et à la diffusion de neutrons rapides émis par la source. Ainsi, une proximité d'au moins un détecteur comportant un matériau scintillateur organique améliore sensiblement la composante neutronique dans le spectre détecté par le scintillateur inorganique dopé au $^6$Li. La troisième configuration (figure 3C), est particulièrement favorable. L'effet de diffusion est d'autant plus marqué que le premier détecteur 10 est proche du deuxième détecteur 20, et que le matériau organique formant le premier détecteur est volumineux. On peut tirer profit de la possibilité de réaliser des matériaux scintillateurs organique de grand volume : cela permet d'augmenter la sensibilité de détection du détecteur scintillateur organique, tout en augmentant l'effet de diffusion de neutrons, ce qui augmente la sensibilité de détection des neutrons par le détecteur scintillateur inorganique adjacent.

Un autre avantage d'un scintillateur inorganique dopé au $^6$Li est une possibilité de discriminer les impulsions générées par les interactions de photons X ou gamma, et par les neutrons thermiques ou intermédiaires. Chaque interaction détectée, générée par un neutron ou un photon, donne lieu à une impulsion électrique dont la forme dépend du rayonnement ayant interagi avec le matériau détecteur. La figure 5 schématise une impulsion détectée respectivement suite à une interaction d'un photon dans le matériau scintillateur (courbe en **trait plein)** ou suite à une interaction d'un neutron dans le matériau scintillateur (courbe en pointillés). Dans ce dernier cas, l'impulsion est affectée d'une « queue », ou « traîne », usuellement désignée par le terme anglosaxon « tail ». Pour chaque impulsion détectée, on peut déterminer un paramètre de forme, par exemple un ratio $\frac{Qtot-Qshort}{Qtot}$, où :

- $Q_{tot}$ correspond à la charge totale détectée, c'est-à-dire à l'intégrale de l'impulsion ;
- $Q_{short}$ correspond à la proportion de $Q_{tot}$ correspondant à l'impulsion sans la traîne : *cf.* partie hachurée de la figure 5.

La mesure des paramètres $Q_{tot}$ et $\frac{Qtot-Qshort}{Qtot}$, de chaque interaction permet une discrimination entre les photons gamma et les neutrons. Les photons gamma forment une zone distribuée en énergie ($Q_{tot}$ variable), avec un ratio $\frac{Qtot-Qshort}{Qtot}$ élevé. Cela traduit le fait que les impulsions résultant d'interactions de photons y dans un scintillateur inorganique dopé au $^6$Li sont relativement symétriques, et fortement distribuées en amplitude.

Les impulsions résultant d'interactions de neutrons thermiques ou intermédiaires dans le scintillateur inorganique dopé au $^6$Li sont plus dissymétriques, et moins distribuées en amplitude. Le ratio $\frac{Qtot-Qshort}{Qtot}$ est plus faible que celui des impulsions résultant d'une interaction d'un photon gamma.

Afin de pouvoir séparer efficacement la contribution photons et la contribution neutrons dans chaque spectre, l'unité de traitement comporte un analyseur de forme 33, permettant une détermination de la charge totale $Q_{tot}$ détectée par chaque impulsion ainsi que la partie $Q_{short}$ correspondant à l'impulsion sans la traîne. L'analyseur de forme permet de déterminer le paramètre de forme $\frac{Qtot-Qshort}{Qtot}$ de chaque impulsion. Sur la base de $Q_{tot}$ et de $\frac{Qtot-Qshort}{Qtot}$, l'impulsion est assignée soit à un photon, soit à un neutron par le discriminateur 34 précédemment décrit.

Les figures 6A à 6E sont des figures représentant un nombre d'impulsions détectées en fonction de l'énergie (axe des abscisses - keV) et du paramètre de forme, c'est-à-dire le ratio $\frac{Qtot-Qshort}{Qtot}$ résultant de l'analyseur 33 (axe des ordonnées). Le niveau de gris correspond au nombre d'impulsions détectées. Chaque figure correspond à une durée d'acquisition de 10 minutes.

Les figures 6A et 6B ont été obtenues selon la première configuration, représentée sur la figure 3A, en utilisant respectivement la source de $^{131}$Cs et $^{60}$Co. Les pics d'émission à 662 keV, 1173 keV et 1332 keV sont bien marqués : on dénombre par exemple 344392 coups (*i.e* impulsions détectées) à 662 keV et 295619 coups à 1173 keV. On a entouré une région d'intérêt, correspondant aux impulsions attribuées à des neutrons. Le signal, dans cette zone d'intérêt, est ici représentatif du bruit de fond ambiant : 47 coups sur la figure 6A et 55 coups sur la figure 6B.

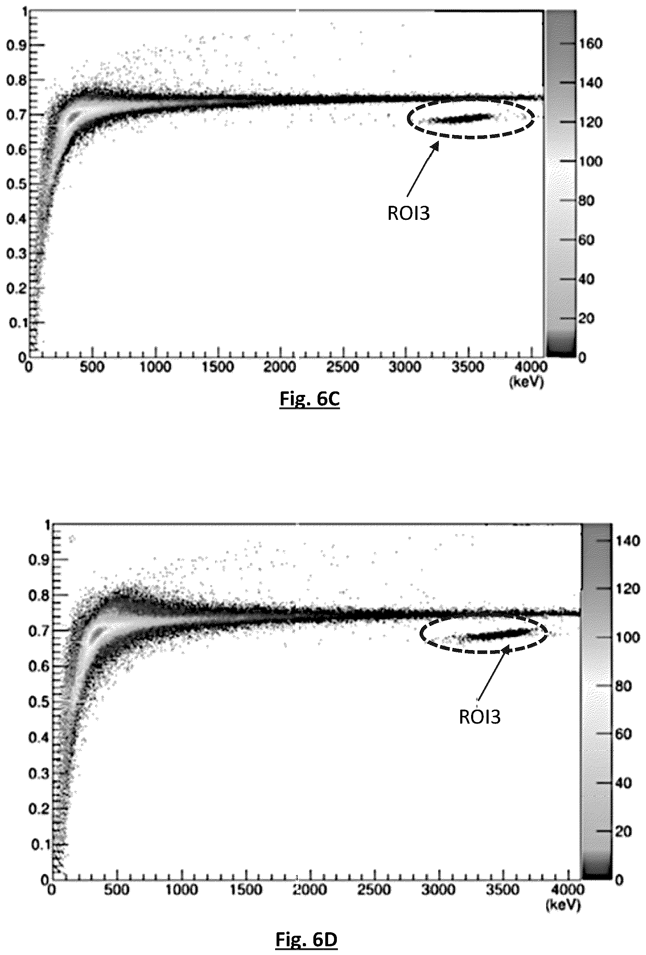

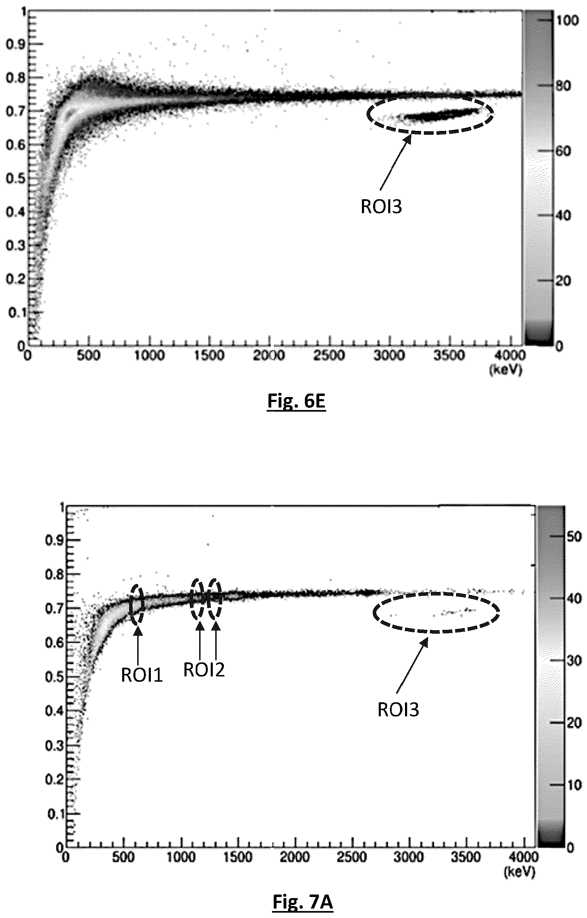

Les figures 6C, 6D et 6E ont été obtenues selon les première, deuxième et troisième configurations respectivement représentées sur les figures 3A, 3B et 3C, en utilisant la source de $^{252}$Cf. On dénombre respectivement 1408 coups, 2310 coups et 4778 coups attribués à des neutrons. La comparaison des figures 6D et 6E avec la figure 6C montre l'intérêt de disposer un matériau organique à proximité du scintillateur inorganique dopé au $^6$Li. Cela permet de créer un environnement thermalisant, ce qui augmente la quantité de neutrons détectés par le scintillateur inorganique.

Sur les figures 6C, 6D et 6E, on peut également apprécier les impulsions détectées, en dehors de la région d'intérêt encerclée correspondent à des photons gamma prompts ou retardés résultant de la fission spontanée du $^{252}$Cf.

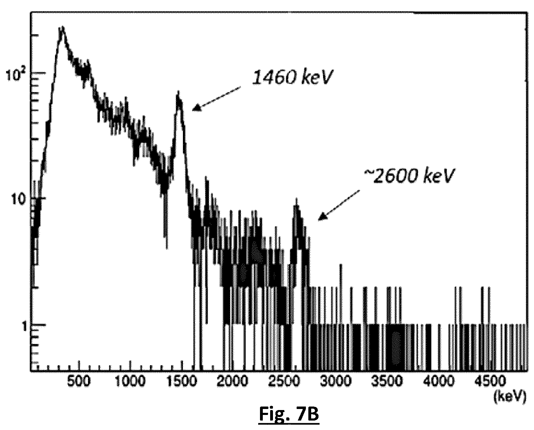

Afin d'évaluer la limite de détection, on a utilisé un scintillateur inorganique 20, selon la première configuration (figure 3A), en l'absence de source. La figure 7A représente les impulsions détectées selon un diagramme Energie / paramètre de forme $\frac{Qtot-Qshort}{Qtot}$. La figure 7B montre un spectre d'énergie. Les figures 7A et 7B sont représentatives du bruit de fond. Les valeurs de bruit de fond permettent de calculer une limite de détection pour une durée d'acquisition de 10 minutes. Pour $^{137}$Cs et $^{60}$Co, la limite de détection est de 12.9 coups par seconde et 9.78 coups par seconde respectivement. S'agissant de la détection de neutrons, dans le pic centré sur 3500 keV, la limite de détection est de 0.05 coups par seconde.

Les résultats présentés sur les figures 6A à 6E ont été établis en utilisant des sources dont l'émission photonique ou neutronique est connue. On peut ainsi établir un coefficient de sensibilité k permettant d'effectuer une correspondance entre l'activité de la source, située à 30 cm du scintillateur inorganique, et le taux de comptage (coups par seconde), pour une durée d'acquisition de 10 minutes.

En ce qui concerne la détection de neutrons, le coefficient de sensibilité k est différent pour les trois configurations testées. On peut ramener le taux d'émission de la source de $^{252}$Cf utilisée à un équivalent en masse de $^{240}$Pu, ce qui permet d'exprimer le coefficient de sensibilité en coups/s par gramme de $^{240}$Pu.

La limite de détection, exprimée en Bq pour $^{137}$Cs ou $^{60}$Co, ou g de $^{240}$Pu pour les mesures de neutrons, est obtenue en divisant la limite de détection, exprimée en coups par seconde (ou nombre d'impulsions détectées par seconde) par un coefficient de sensibilité k.

Le tableau 1 présente, pour chaque configuration testée :

- le bruit de fond, déterminé dans les régions d'intérêt spectrales 662 keV (ROI1) pour $^{137}$Cs, 1173 et 1332 keV (ROI2) pour $^{60}$Co et ROI3 pour les neutrons, sur la figure 7A.
- les signaux bruts mesurés, sur la ROI1 de la figure 6A pour $^{137}$Cs, ROI2 de la figure 6B pour $^{60}$Co, ROI3 des figures 6D, 6D et 6E pour les mesures neutroniques.
- les signaux nets calculés ;
- pour les mesures neutroniques, les différents rendements de détection et la masse équivalent $^{240}$Pu correspondant à chaque taux de comptage net ;
- les coefficients de sensibilité, permettant d'établir une correspondance entre des taux de comptage et des valeurs d'activité pour $^{137}$Cs, $^{60}$Co, à partir des taux de comptage de photons, ou une masse équivalent $^{240}$Pu à partir des taux de comptage neutroniques;
- les limites de détection exprimées à la fois en coups.s$^{-1}$ ou bien par unité d'activité (Bq) pour les sources $^{137}$Cs et $^{60}$Co ou bien en masse équivalent $^{241}$Pu pour la source neutronique.

Dans les lignes « bruit de fond » et « taux de comptage brut », on a renseigné la figure sur laquelle la valeur indiquée a été mesurée.

Tableau 1

| | $^{137}$Cs | $^{60}$Co | $^{240}$Pu- fig. 3A | $^{240}$Pu - fig. 3B | $^{240}$Pu - fig. 3C |
|---|---|---|---|---|---|
| Bruit de fond [coups] | 3252 (fig. 7A) | 1863 (fig. 7A) | 28 (fig. 7A) | 28 (fig. 7A) | 28 (fig. 7A) |
| Signal brut [coups] | 344392 (fig. 6A) | 295619 (fig. 6B) | 1408 (fig. 6C) | 2310 (fig. 6D) | 4778 (fig. 6E) |
| Signal net [coups] | 341140 | 293756 | 1380 | 2282 | 4750 |
| Taux de comptage [coups.s$^{-1}$] | 568.56 | 489.59 | 2.300 | 3.803 | 7.917 |
| Rendement de détection neutron | | | 8.519 10$^{-5}$ | 1.409 10$^{-4}$ | 2.932 10$^{-4}$ |
| Masse équivalente $^{240}$Pu [g] | | | 26.48 | 26.48 | 26.48 |
| LD [coups/s] | 12.9 | 9.78 | 0.05 | 0.05 | 0.05 |
| k [coups.s-1/Bq] ou [/ g $^{240}$Pu] | 1.24 10$^{-3}$ | 1.56 10$^{-3}$ | 0.0868 | 0.1436 | 0.2988 |
| LD [Bq] ou [g. $^{240}$Pu] | 10453 | 6279.5 | 0.5632 | 0.3405 | 0.1636 |

On observe que les configurations des figures 3B et 3C permettent d'abaisser significativement la limite de détection de $^{240}$Pu. Ces agencements permettent d'augmenter la sensibilité de la balise à l'égard d'isotopes émettant des neutrons.

Les figures 8A et 8B montrent respectivement des spectres obtenus sur chacun des scintillateurs organique 10, agencés selon la troisième configuration (figure 3C), en utilisant successivement une source de $^{137}$Cs (courbe a), une source de $^{60}$Co (courbe b) ou une source de $^{252}$Cf (courbe c). Les spectres ont été obtenus en connectant chaque détecteur à une unité de traitement spectrométrique.

Comme précédemment indiqué, avec ce type de détecteur, l'interaction prédominante des photons gamma est la diffusion inélastique, ou diffusion Compton. Compte tenu de la probabilité négligeable d'interaction photoélectrique, les pics d'émission caractéristiques de $^{137}$Cs, $^{60}$Co ou le pic correspondant à une détection de neutrons ne sont pas détectables. Cependant, la forme du spectre est corrélée à la nature du rayonnement détectée : Les spectres formés en utilisant $^{137}$Cs et $^{60}$Co comportent un front, dont la position dépend de l'énergie des photons détectés. Ainsi, la détection d'un front indique une présence d'une source émettant des photons et la position du front peut renseigner sur l'énergie des photons émis par la source, donc sur la nature des isotopes émetteurs gamma. L'absence de front sur le spectre indique que la source détectée émet principalement des neutrons. Ainsi, les scintillateurs organiques peuvent être utilisés pour établir une première indication sur le type de rayonnement émis par une source détectée par la balise.

Une analyse quantitative peut être effectuée en soustrayant le signal mesuré à un signal correspondant à un bruit de fond, acquis en l'absence de source irradiante. Sur les figures 8A et 8B, le signal de bruit de fond correspond à la courbe d). La prise en compte du bruit de fond, et sa soustraction au signal mesuré, permet d'obtenir une information quantitative spécifique à une éventuelle source irradiante. Cette information quantitative peut être cumulée avec l'information spectrale résultant du scintillateur inorganique. Cela permet d'améliorer le niveau de confiance quant à la détection d'une source, en particulier lorsque la détection résultant du scintillateur inorganique est proche de la limite de détection.

Un avantage des scintillateurs organiques est qu'ils peuvent être produits selon des volumes importants, ce qui leur confère une sensibilité élevée, permettant une détection rapide d'un rayonnement, neutronique ou photonique, émis par une source. En cas de détection suspecte, l'unité de traitement peut acquérir un spectre des impulsions détectées par le scintillateur inorganique, de façon à identifier plus précisément le type de source. Plus le volume des scintillateurs organique est élevé, plus l'effet de modération des neutrons est important, ce qui permet d'améliorer la sensibilité de détection du scintillateur inorganique vis-à-vis des neutrons.

De plus, les scintillateurs organiques sont sensibles au neutrons rapides, contrairement au scintillateur inorganique dopé au $^{6}$Li, qui est sensible aux neutrons thermiques ou thermalisés. La sensibilité des scintillateurs organiques à l'égard des neutrons rapides ainsi qu'aux photons peut être mise à profit pour obtenir une information quant à la présence d'isotopes se désintégrant par fission spontanée dans la source détectée.

Les signaux détectés par un scintillateur organique peuvent être analysés par un circuit de coïncidence temporelle, afin d'établir une courbe de Rossi-Alpha. Une courbe de Rossi-Alpha est un histogramme d'interactions détectées dans une fenêtre temporelle suivant une détection d'une interaction. La largeur de la fenêtre temporelle est typiquement de quelques centaines de ns. Des courbes de Rossi-Alpha ont été établies en utilisant la configuration décrite en lien avec la figure 3B. On a successivement utilisé la source de $^{137}$Cs, $^{60}$Co puis $^{252}$Cf. On a assigné à chaque impulsion détectée, une étiquette temporelle correspondant à l'instant de détection. Les courbes de Rossi alpha ont été obtenues en post-traitement, sur la base des étiquettes temporelles assignées à chaque impulsion. L'impulsion initiale est l'impulsion ayant initié l'ouverture de la fenêtre temporelle. Après une exposition d'une durée suffisante (10 minutes), on a établi un histogramme des décalages temporels mesurés. L'impulsion initiale et chaque impulsion détectée dans la même fenêtre temporelle sont considérées comme coïncidentes, au décalage temporel près.

La figure 9 représente un nombre d'interactions coïncidentes (axe des ordonnées) pour différents décalages temporels (axe des abscisses - unité [ns]). Sur la figure 9, les courbes a), b) et c) correspondent respectivement à la source de $^{137}$Cs, la source de $^{60}$Co et la source de $^{252}$Cf. Les courbes a) et b) sont typiques de sources irradiantes émettrices de photons. Sur la courbe c), l'histogramme des décalages temporels décrit un pic centré sur 30 ns. Cet histogramme correspond à des coïncidences ($\gamma$, n), résultant de la fission spontanée de $^{252}$Cf. En effet, une fission spontanée génère une émission simultanée de photons y et de neutrons rapides dits prompts. Les neutrons rapides se propagent dans l'air selon une vitesse inférieure à celle des photons, ce qui explique le décalage temporel observé. Le décalage temporel correspondant au pic observé dépend de la distance entre la source et les détecteurs. Plus la distance est importante, plus le décalage est élevé.

Ainsi, lorsqu'un scintillateur, ou plusieurs scintillateurs, sont raccordés à un circuit de détection de coïncidences temporelles, l'obtention d'un histogramme de décalages temporels d'impulsions considérées comme coïncidentes (i-e détectées dans une fenêtre temporelle étroite) permet d'identifier le type de source. Plus précisément, l'apparition d'un pic, correspondant à un décalage temporel de quelques dizaines de ns, entre deux interactions coïncidentes, indiquent une potentielle présence d'une source de neutrons par fission spontanée.

On note qu'un tel pic n'apparaît pas lorsqu'une source de neutrons, détectée par la balise est constituée d'un mélange d'un isotope émetteur alpha avec un matériau cible permettant une réaction ($\alpha$,n) : une telle source est usuellement désignée source (α,n). Ainsi, le recours à un histogramme de type Rossi-Alpha permet une discrimination entre une source neutronique par fission spontanée et une source neutronique de type (α,n), par exemple une source de type Am-Li.

Ce mode de réalisation utilise le fait que le ou chaque scintillateur organique est sensible aux neutrons rapides, contrairement au scintillateur inorganique dopé, qui est sensible aux neutrons thermiques ou intermédiaires.

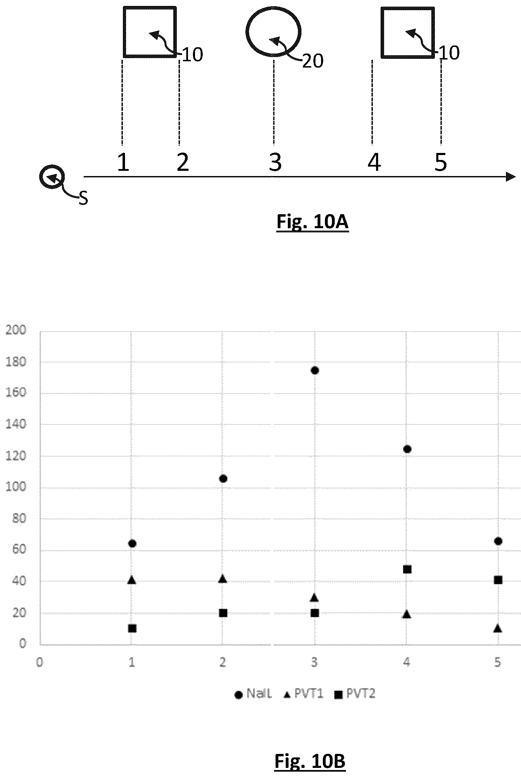

Les figures 10A et 10B illustrent une utilisation possible d'une balise comportant plusieurs scintillateurs, comme représentés sur la figure 3B. La figure 10A montre la disposition des scintillateurs formant la balise, ainsi qu'un trajet suivi par une source. Le trajet de la source a été matérialisé par une flèche. On a identifié cinq positions de la source, numérotées de 1 à 5. la figure 10B représente un taux de comptage (axe des ordonnées) mesurés par les trois détecteurs : NaIL, PVT1 (scintillateur organique) et PVT2 (autre scintillateur organique), en fonction de la position de la source (axe des abscisses).

Afin d'obtenir des grandeurs comparables, les taux de comptage de PVT1 et PVT2 ont été divisés par 100. On observe que l'évolution temporelle des taux de comptage permet de déterminer qu'une source est mobile et d'estimer une direction de son mouvement. Il s'agit d'un avantage lié à l'utilisation de différents détecteurs indépendants dans une même balise.

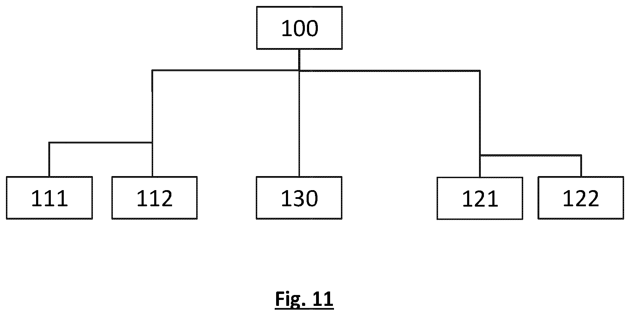

La figure 11 résume les principales étapes de traitement pouvant être mises en œuvre par l'unité de traitement.

Au cours d'une étape 100, la balise est placée en mode surveillance. Les signaux de détection issus de chaque détecteur sont représentatifs du bruit de fond, aux fluctuations statistiques près. Lorsque le taux de comptage d'au moins un signal de détection dépasse un seuil d'alerte, la balise bascule en mode d'alerte. Le seuil d'alerte peut être prédéfini. Il peut par exemple s'agir d'une moyenne de signaux, par exemple de type moyenne glissante, à laquelle est ajoutée n fois l'écart type.

Suite au basculement en mode d'alerte, les traitements effectués par la balise visent à caractériser la source à partir des signaux de détection résultant des différents détecteurs.

Le traitement peut être comporter une ou plusieurs opérations suivantes :

- 111 : formation d'un spectre en énergie à partir d'un premier signal de détection, résultant d'un scintillateur organique, et estimation d'une présence de neutrons ou de photons.
- 121 : formation d'un spectre en énergie à partir d'un deuxième signal de détection, résultant du scintillateur inorganique, de façon à identifier des isotopes y et une émission de neutrons.
- 122 : discrimination des impulsions du deuxième signal de détection en fonction de leur forme et de leur énergie afin distinguer une composante photonique et une composante neutronique du rayonnement détecté
- 112 : établissement d'un histogramme de type Rossi-alpha, de façon à identifier une potentielle réaction de fission spontanée dans la source. L'étape 112 peut être effectuée en cas de confirmation d'une composante neutronique suite aux étapes 122 et/ou 121 et/ou 111.
- 130 : comparaison des taux de comptage résultant de chaque détecteur et estimation d'un déplacement de la source.

L'invention est basée sur une certaine complémentarité des capacités de détection de deux types de détecteurs :

- chaque premier détecteur est de type scintillateur organique : il présente une sensibilité de détection élevée aux photons et aux neutrons rapides, ce qui est idéal pour qu'il soit utilisé en tant que détecteur d'alerte ;
- chaque deuxième détecteur est de type scintillateur inorganique dopé : il peut être utilisé à des fins de caractérisation plus fine, en particulier pour identifier des isotopes gamma ou discriminer des composantes neutroniques ou photoniques du rayonnement produit par la source. La proximité avec au moins un premier détecteur augmente significativement la sensibilité à l'égard des neutrons.
- chaque premier détecteur peut être utilisé pour détecter la survenue de fissions spontanées dans la source.

**Revendications**

**1.** Balise de détection (1), destinée à détecter une présence d'une source irradiante dans un environnement s'étendant autour de ladite balise, la source irradiante étant susceptible d'émettre des photons ionisants, de type X ou gamma, et/ou des neutrons, la balise comportant :

- au moins un premier détecteur (10), comportant un matériau scintillateur organique (11), tridimensionnel, le premier détecteur étant configuré pour former une impulsion suite à une interaction d'un neutron ou d'un photon dans le matériau scintillateur organique et pour générer un premier signal de détection à partir de chaque impulsion ainsi formée ;

la balise de détection étant **caractérisée en ce qu'**elle comporte :

- au moins un deuxième détecteur (20), comportant un matériau scintillateur inorganique (12), tridimensionnel, ayant fait l'objet d'une adjonction d'un isotope de capture, propice à une capture de neutrons thermiques, le deuxième détecteur étant configuré pour former une impulsion suite à une interaction d'un neutron ou d'un photon dans le matériau scintillateur inorganique, et générer un deuxième signal de détection à partir de chaque impulsion ainsi formée, la plus petite dimension du deuxième détecteur étant supérieure à 1 cm ;
- une unité de traitement (30), reliée à chaque premier et à chaque deuxième détecteur, l'unité de traitement étant configurée pour effectuer une caractérisation de la source irradiante détectée par la balise à partir du premier signal de détection et du deuxième signal de détection.

2. Balise selon la revendication 1, dans lequel la distance entre au moins un matériau scintillateur organique d'un premier détecteur de ladite balise et au moins un matériau scintillateur inorganique d'un deuxième détecteur de ladite balise est inférieure à 20 cm.

3. Balise selon l'une quelconque des revendications précédentes, dans lequel plusieurs matériaux scintillateurs organiques de plusieurs premiers détecteurs respectifs de ladite balise sont agencés autour d'un matériau scintillateur inorganique d'un deuxième détecteur.

4. Balise selon l'une quelconque des revendications précédentes, dans lequel plusieurs matériaux scintillateurs organiques de plusieurs premiers détecteurs respectifs de ladite **balise sont** agencés de part et d'autre d'un matériau scintillateur inorganique d'un deuxième détecteur.

5. Balise selon l'une quelconque des revendications précédentes, comportant :

- un analyseur multicanal (32), programmé pour déterminer une amplitude de chaque impulsion résultant d'au moins un deuxième détecteur (20) de ladite balise, et former un spectre d'énergie, représentant un nombre d'impulsions détectées en fonction de leur amplitude respective ;
- l'unité de traitement (30) étant configurée pour identifier des isotopes émetteurs y en fonction du spectre d'énergie.

6. Balise selon l'une quelconque des revendications précédentes, comportant :

- un analyseur multicanal (32), programmé pour déterminer une amplitude de chaque impulsion résultant d'au moins un deuxième détecteur de ladite balise ;
- un analyseur de forme d'impulsions (33), programmé pour analyser une forme des impulsions résultant du deuxième détecteur et déterminer un paramètre de forme ( $\frac{Qtot-Qshort}{Qtot}$ ) de chaque impulsion analysée ;
- un discriminateur (34), de façon à discriminer, dans le deuxième signal de détection, des impulsions résultant respectivement d'une interaction d'un photon ou d'un neutron dans le deuxième détecteur ;
- l'unité de traitement est programmée pour déterminer une contribution photonique et une contribution neutronique de l'irradiation produite par la source.

7. Balise selon l'une quelconque des revendications précédentes, dans laquelle :

- la balise comporte un circuit d'analyse de coïncidence temporelle (35), programmé pour établir, à partir du ou de chaque premier signal de détection, un histogramme de l'écart temporel séparant deux détections consécutives d'impulsions ;
- l'unité de traitement étant programmée pour déterminer une survenue d'une réaction de fission spontanée dans la source à partir de l'histogramme.

8. Balise selon l'une quelconque des revendications précédentes, dans laquelle :

- la balise comporte un analyseur multicanal (32), programmé pour déterminer une amplitude de chaque impulsion résultant d'au moins un premier détecteur (10) de ladite balise, et former un spectre d'énergie, représentant un nombre d'impulsions en fonction de leur amplitude respective ;
- l'unité de traitement est configurée pour identifier des isotopes émetteurs y en fonction du spectre d'énergie.

9. Balise selon l'une quelconque des revendications précédentes, dans lequel l'isotope de capture est $^6$Li ou $^{10}$B.

10. Procédé de détection d'une source irradiante présente dans un environnement s'étendant autour d'une balise (1) selon l'une quelconque des revendications précédentes, comportant les étapes de :

   a) analyse d'au moins un premier signal de détection et d'au moins un deuxième signal de détection, de telle sorte que lorsque le premier signal de détection franchit un premier seuil ou lorsque le deuxième signal de détection franchit un deuxième seuil, un signal d'alerte est donné ;
   b) suite à l'émission d'un signal d'alerte, caractérisation du rayonnement émis par la source à l'aide du premier signal de détection et/ou du deuxième signal de détection.

11. Procédé selon la revendication 10, dans lequel :

   - la balise comporte un analyseur multicanal (32), programmé pour déterminer une amplitude de chaque impulsion résultant d'au moins un deuxième détecteur, et former un spectre d'énergie, représentant un nombre d'impulsions en fonction de leur amplitude respective ;
   - l'étape b) comporte une identification d'isotopes émetteurs y à partir du spectre d'énergie.

12. Procédé selon l'une quelconque des revendications 10 ou 11, dans lequel la balise comporte un analyseur multicanal, programmé pour déterminer une amplitude de chaque impulsion détectée par au moins un deuxième détecteur, et dans lequel l'étape b) comporte les sous-étapes de :

   - analyse de la forme des impulsions générées par le deuxième détecteur, de façon à assigner un paramètre de forme ( $\frac{Qtot - Qshort}{Qtot}$ ) à chaque impulsion ;
   - classement de chaque impulsion en fonction du paramètre de forme et de l'énergie, de façon que chaque impulsion soit attribuée à un photon ou à un neutron.

13. Procédé selon l'une quelconque des revendications 10 à 12, dans lequel :

   - la balise comporte un circuit d'analyse de coïncidence temporelle (35), programmé pour établir, à partir d'au moins un premier signal de détection de ladite balise, un histogramme de l'écart temporel séparant deux détections d'impulsions consécutives ;
   - l'étape b) comporte une détection d'une réaction de fission spontanée en fonction de l'histogramme.

14. Procédé selon la revendication 13, dans lequel le circuit d'analyse de coïncidence temporelle est relié à deux premiers détecteurs de ladite balise ou à un premier détecteur de ladite balise et à un deuxième détecteur de ladite balise.

15. Procédé selon l'une quelconque des revendications 10 à 14, dans lequel :

   - la balise comporte un analyseur multicanal, programmé pour déterminer une amplitude de chaque impulsion détectée par au moins un premier détecteur de ladite balise, et former un spectre d'énergie, représentant un nombre d'impulsions détectées en fonction de leur amplitude respective ;
   - l'étape b) comporte une identification d'isotopes émetteurs y à partir du spectre d'énergie.

16. Procédé selon l'une quelconque des revendications 10 à 15, dans lequel l'étape b) comporte une comparaison de chaque premier signal de détection et de chaque deuxième signal de détection en différents instants, de façon à estimer un mouvement de la source détectée.

**Patentansprüche**

1. Bake (1) zum Detektieren des Vorhandenseins einer Strahlungsquelle in einer Umgebung, die sich um die Bake herum erstreckt, wobei die Strahlungsquelle ionisierende Photonen vom Typ X oder Gamma und/oder Neutronen emittieren kann, wobei die Bake umfasst:

   - mindestens einen ersten Detektor (10) mit einem dreidimensionalen organischen Szintillatormaterial (11), wobei der erste Detektor so konfiguriert ist, dass er nach einer Wechselwirkung eines Neutrons oder eines Photons im organischen Szintillatormaterial einen Impuls bildet und aus jedem so gebildeten Impuls ein erstes Detektionssignal hervorgeht;

wobei die Bake **dadurch gekennzeichnet ist, dass** sie umfasst:

- mindestens einen zweiten Detektor (20) mit einem dreidimensionalen anorganischen Szintillatormaterial (12), dem ein Einfangisotop zugesetzt wurde, das zum Einfangen thermischer Neutronen geeignet ist, wobei der zweite Detektor so konfiguriert ist, dass er nach einer Wechselwirkung eines Neutrons oder eines Photons im anorganischen Szintillatormaterial einen Impuls bildet und aus jedem so gebildeten Impuls ein zweites Detektionssignal hervorgeht, wobei die kleinste Abmessung des zweiten Detektors größer als 1 cm ist;
- eine Verarbeitungseinheit (30), die mit jedem ersten und jedem zweiten Detektor verbunden ist, wobei die Verarbeitungseinheit so konfiguriert ist, dass sie anhand des ersten Detektionssignals und des zweiten Detektionssignals eine Charakterisierung der von der Bake detektierten Strahlungsquelle durchführt.

2. Bake nach Anspruch 1, wobei der Abstand zwischen mindestens einem organischen Szintillatormaterial eines ersten Detektors der Bake und mindestens einem anorganischen Szintillatormaterial eines zweiten Detektors der Bake weniger als 20 cm beträgt.

3. Bake nach einem der vorstehenden Ansprüche, wobei mehrere organische Szintillatormaterialien mehrerer jeweiliger erster Detektoren der Bake um ein anorganisches Szintillatormaterial eines zweiten Detektors herum angeordnet sind.

4. Bake nach einem der vorstehenden Ansprüche, wobei mehrere organische Szintillatormaterialien mehrerer erster Detektoren der Bake auf beiden Seiten eines anorganischen Szintillatormaterials eines zweiten Detektors angeordnet sind.

5. Bake nach einem der vorstehenden Ansprüche, umfassend:

- einen Mehrkanalanalysator (32), der so programmiert ist, dass er eine Amplitude jedes Impulses bestimmt, der von mindestens einem zweiten Detektor (20) der Bake stammt, und ein Energiespektrum bildet, das eine Anzahl von detektierten Impulsen in Abhängigkeit von ihrer jeweiligen Amplitude darstellt;
- wobei die Verarbeitungseinheit (30) so konfiguriert ist, dass sie γ-emittierende Isotope in Abhängigkeit vom Energiespektrum identifiziert.

6. Bake nach einem der vorstehenden Ansprüche, umfassend:

- einen Mehrkanalanalysator (32), der so programmiert ist, dass er eine Amplitude jedes Impulses bestimmt, der von mindestens einem zweiten Detektor der Bake stammt;
- einen Impulsformanalysator (33), der so programmiert ist, dass er eine Form der vom zweiten Detektor stammenden Impulse analysiert und einen Formparameter ($\frac{Qtot-Qshort}{Qtot}$) jedes analysierten Impulses bestimmt;
- einen Diskriminator (34), um im zweiten Detektionssignal Impulse zu unterscheiden, die jeweils aus einer Wechselwirkung eines Photons oder eines Neutrons im zweiten Detektor stammen;
- die Verarbeitungseinheit ist so programmiert, dass sie einen Photonenbeitrag und einen Neutronenbeitrag der von der Quelle stammenden Strahlung bestimmt.

7. Bake nach einem der vorstehenden Ansprüche, wobei:

- die Bake eine Zeitkoinzidenz-Analyseschaltung (35) umfasst, die so programmiert ist, dass sie aus dem oder jedem ersten Detektionssignal ein Histogramm der Zeitdifferenz zwischen zwei aufeinanderfolgenden Impulsdetektionen erstellt;
- die Verarbeitungseinheit so programmiert ist, dass sie anhand des Histogramms das Auftreten einer spontanen Spaltungsreaktion in der Quelle bestimmt.

8. Bake nach einem der vorstehenden Ansprüche, wobei:

- die Bake einen Mehrkanalanalysator (32) umfasst, der so programmiert ist, dass er eine Amplitude jedes Impulses bestimmt, der von mindestens einem ersten Detektor (10) der Bake stammt, und ein Energiespektrum bildet, das eine Anzahl von Impulsen in Abhängigkeit von ihrer jeweiligen Amplitude darstellt;
- die Verarbeitungseinheit so konfiguriert ist, dass sie γ-emittierende Isotope in Abhängigkeit vom Energiespektrum identifiziert.

9. Bake nach einem der vorstehenden Ansprüche, wobei das Einfangisotop $^6$Li oder $^{10}$B ist.

10. Verfahren zum Erfassen einer Strahlungsquelle, die in einer Umgebung vorhanden ist, die sich um eine Bake (1) nach einem der vorstehenden Ansprüche erstreckt, mit den folgenden Schritten:

   a) Analyse mindestens eines ersten Detektionssignals und mindestens eines zweiten Detektionssignals, so dass, wenn das erste Detektionssignal einen ersten Schwellenwert überschreitet oder wenn das zweite Detektionssignal einen zweiten Schwellenwert überschreitet, ein Alarmsignal ausgegeben wird;
   b) nach der Ausgabe eines Alarmsignals Charakterisierung der von der Quelle emittierten Strahlung mit Hilfe des ersten Detektionssignals und/oder des zweiten Detektionssignals.

11. Verfahren nach Anspruch 10, wobei:

   - die Bake umfasst einen Mehrkanalanalysator (32), der so programmiert ist, dass er die Amplitude jedes Impulses, der von mindestens einem zweiten Detektor stammt, bestimmt und ein Energiespektrum bildet, das eine Anzahl von Impulsen in Abhängigkeit von ihrer jeweiligen Amplitude darstellt.
   - Schritt b) umfasst die Identifizierung von γ-emittierenden Isotopen anhand des Energiespektrums.

12. Verfahren nach einem der Ansprüche 10 oder 11, wobei die Bake einen Mehrkanalanalysator umfasst, der so programmiert ist, dass er eine Amplitude jedes von mindestens einem zweiten Detektor erfassten Impulses bestimmt, und wobei Schritt b) die folgenden Teilschritte umfasst:

   - Analyse der Form der vom zweiten Detektor stammenden Impulse, um jedem Impuls einen Formparameter ( $\frac{Qtot - Qshort}{Qtot}$ ) zuzuweisen;
   - Klassifizierung jedes Impulses in Abhängigkeit vom Formparameter und der Energie, so dass jeder Impuls einem Photon oder einem Neutron zugeordnet wird.

13. Verfahren nach einem der Ansprüche 10 bis 12, wobei:

   - die Bake eine Zeitkoinzidenz-Analyseschaltung (35) umfasst, die so programmiert ist, dass sie ausgehend von mindestens einem ersten Detektionssignal der Bake ein Histogramm der Zeitdifferenz zwischen zwei aufeinanderfolgenden Impulsdetektionen erstellt;
   - Schritt b) eine Detektion einer spontanen Spaltungsreaktion in Abhängigkeit vom Histogramm umfasst.

14. Verfahren nach Anspruch 13, wobei die Schaltung zur Analyse zeitlicher Koinzidenzen mit zwei ersten Detektoren der Bake oder mit einem ersten Detektor der Bake und einem zweiten Detektor der Bake verbunden ist.

15. Verfahren nach einem der Ansprüche 10 bis 14, wobei:

   - die Bake einen Mehrkanalanalysator umfasst, der so programmiert ist, dass er eine Amplitude jedes von mindestens einem ersten Detektor der Bake erfassten Impulses bestimmt und ein Energiespektrum bildet, das eine Anzahl von erfassten Impulsen in Abhängigkeit von ihrer jeweiligen Amplitude darstellt;
   - Schritt b) eine Identifizierung von γ-emittierenden Isotopen anhand des Energiespektrums umfasst.

16. Verfahren nach einem der Ansprüche 10 bis 15, wobei Schritt b) einen Vergleich jedes ersten Detektionssignals und jedes zweiten Detektionssignals zu verschiedenen Zeitpunkten umfasst, um eine Bewegung der detektierten Quelle zu schätzen.

**Claims**

1. Detection beacon (1) for detecting the presence of a radiation source in an environment extending around said beacon, the radiation source being capable of emitting ionizing photons, such as X-rays or gamma rays, and/or neutrons, the beacon comprising:

- at least one first detector (10), comprising a three-dimensional organic scintillator material (11), the first detector being configured to form a pulse following an interaction of a neutron or a photon in the organic scintillator material and to generate a first detection signal from each pulse thus formed;

the detection beacon being **characterized in that** it comprises:

- at least one second detector (20), comprising a three-dimensional inorganic scintillator material (12) to which a capture isotope conducive to thermal neutron capture has been added, the second detector being configured to form a pulse following an interaction of a neutron or a photon in the inorganic scintillator material, and to generate a second detection signal from each pulse thus formed, the smallest dimension of the second detector being greater than 1 cm;
- a processing unit (30), connected to each first and second detector, the processing unit being configured to characterize the radiation source detected by the beacon based on the first detection signal and the second detection signal.

2. Beacon according to claim 1, wherein the distance between at least one organic scintillator material of a first detector of said beacon and at least one inorganic scintillator material of a second detector of said beacon is less than 20 cm.

3. Beacon according to any of the preceding claims, wherein a plurality of organic scintillator materials of a plurality of respective first detectors of said beacon are arranged around an inorganic scintillator material of a second detector.

4. Beacon according to any of the preceding claims, wherein a plurality of organic scintillator materials of a plurality of respective first detectors of said beacon are arranged on either side of an inorganic scintillator material of a second detector.

5. A beacon according to any of the preceding claims, comprising:

- a multichannel analyzer (32), programmed to determine an amplitude of each pulse resulting from at least one second detector (20) of said beacon, and to form an energy spectrum , representing a number of pulses detected as a function of their respective amplitude;
- the processing unit (30) being configured to identify $\gamma$-emitting isotopes as a function of the energy spectrum.

6. Beacon according to any of the preceding claims, comprising:

- a multichannel analyzer (32), programmed to determine an amplitude of each pulse resulting from at least one second detector of said beacon;
- a pulse shape analyzer (33), programmed to analyze a shape of the pulses resulting from the second detector and determine a shape parameter ( $\frac{Qtot-Qshort}{Qtot}$ ) of each analyzed pulse;
- a discriminator (34), so as to discriminate, in the second detection signal, pulses resulting respectively from an interaction of a photon or a neutron in the second detector;
- the processing unit is programmed to determine a photonic contribution and a neutron contribution of the radiation produced by the source.

7. Beacon according to any of the preceding claims, wherein:

- the beacon comprises a temporal coincidence analysis circuit (35), programmed to establish, from the or each first detection signal, a histogram of the temporal interval separating two consecutive pulse detections;
- the processing unit being programmed to determine the occurrence of a spontaneous fission reaction in the source from the histogram.

8. Beacon according to any of the preceding claims, wherein:

- the beacon comprises a multichannel analyzer (32), programmed to determine an amplitude of each pulse resulting from at least one first detector (10) of said beacon, and to form an energy spectrum representing a number of pulses as a function of their respective amplitudes;
- the processing unit is configured to identify γ-emitting isotopes as a function of the energy spectrum.

9. Beacon according to any of the preceding claims, wherein the capture isotope is $^6$Li or $^{10}$B.

10. A method for detecting a radiation source present in an environment extending around a beacon (1) according to any of the preceding claims, comprising the steps of:

a) analyzing at least a first detection signal and at least a second detection signal, such that when the first detection signal crosses a first threshold or when the second detection signal crosses a second threshold, an alert signal is given;
b) following the emission of an alert signal, characterizing the radiation emitted by the source using the first detection signal and/or the second detection signal.

11. Method according to claim 10, wherein:

- the beacon comprises a multichannel analyzer (32), programmed to determine an amplitude of each pulse resulting from at least one second detector, and to form an energy spectrum representing a number of pulses as a function of their respective amplitudes;
- step b) comprises identifying γ-emitting isotopes from the energy spectrum.

12. Method according to any of claims 10 or 11, wherein the beacon comprises a multichannel analyzer programmed to determine an amplitude of each pulse detected by at least one second detector, and wherein step b) comprises the sub-steps of:

- analyzing the shape of the pulses generated by the second detector, so as to assign a shape parameter ($\frac{Qtot-Qshort}{Qtot}$) to each pulse;
- classifying each pulse according to the shape parameter and energy, so that each pulse is assigned to a photon or a neutron.

13. Method according to any of claims 10 to 12, wherein:

- the beacon comprises a time coincidence analysis circuit (35), programmed to establish, from at least a first detection signal from said beacon, a histogram of the time interval between two consecutive pulse detections;
- step b) comprises detecting a spontaneous fission reaction as a function of the histogram.

14. Method according to claim 13, in which the temporal coincidence analysis circuit is connected to two first detectors of said beacon or to a first detector of said beacon and a second detector of said beacon.

15. Method according to any of claims 10 to 14, wherein:

- the beacon comprises a multichannel analyzer, programmed to determine an amplitude of each pulse detected by at least a first detector of said beacon, and to form an energy spectrum representing a number of pulses detected as a function of their respective amplitudes;
- step b) comprises identifying γ-emitting isotopes from the energy spectrum.

16. Method according to any of claims 10 to 15, wherein step b) comprises comparing each first detection signal and each second detection signal at different times, so as to estimate a movement of the detected source.

**Fig. 1A**

**Fig. 1B**

**Fig. 2**

**Fig. 3A**

**Fig. 3B**

**Fig. 3C**

**Fig. 4**

**Fig. 5**

**Fig. 6A**

**Fig. 6B**

**Fig. 6C**

**Fig. 6D**

**Fig. 6E**

**Fig. 7A**

**Fig. 7B**

**Fig. 8A**

**Fig. 8B**

**Fig. 9**

**Fig. 10A**

● NaIL  ▲ PVT1  ■ PVT2

**Fig. 10B**

**Fig. 11**

## RÉFÉRENCES CITÉES DANS LA DESCRIPTION

**Documents brevets cités dans la description**

- US 2018329089 A
- EP 3401706 A
- US 9477005 B